# EUROPEAN PATENT SPECIFICATION

(11) **EP 3 242 227 B1**
(45) Date of publication and mention of the grant of the patent: **26.08.2020**
(21) Application number: 16742659.2
(22) Date of filing: 13.01.2016
(51) Int. Cl.: G06F 16/23

(54) **PAGE QUERYING METHOD AND DATA PROCESSING NODE IN OLTP CLUSTER DATABASE**
SEITENABFRAGEVERFAHREN UND DATENVERARBEITUNGSKNOTEN IN EINER OLTP-CLUSTER-DATENBANK
PROCÉDÉ D'INTERROGATION DE PAGE ET NOEUD DE TRAITEMENT DE DONNÉES DANS UNE BASE DE DONNÉES EN GRAPPE OLTP

(30) Priority: 30.01.2015 CN 201510054832
(43) Date of publication of application: 08.11.2017
(73) Proprietor: Huawei Technologies Co. Ltd., Shenzhen, Guangdong 518129 (CN)
(72) Inventor: LI, Haifeng, Shenzhen Guangdong 518129 (CN); LI, Jian, Shenzhen Guangdong 518129 (CN); REN, Samiao, Shenzhen Guangdong 518129 (CN)
(74) Representative: Gill Jennings & Every LLP
(86) International application number: PCT/CN2016/070818
(87) International publication number: WO 2016/119597

(56) References cited:
- CN-A- 102 906 743
- CN-A- 104 573 112
- US-A1- 2006 010 170
- US-B2- 7 899 794
- US-B2- 8 170 997

## Description

### TECHNICAL FIELD

Embodiments of the present invention relate to the computer field, and more specifically, to a page query method and a data processing node in an OLTP cluster database.

### BACKGROUND

A target architecture of an online transaction processing (On-Line Transaction Processing, OLTP) database is a shared-disk (Shared-disk) OLTP cluster database system whose data processing capability may be linearly improved (Scale-out) by increasing a database server. Therefore, a limitation that a data processing capability of a single-instance database system can be improved (Scale-up) only by upgrading hardware of a database server is overcome. A core component of the OLTP cluster database is a database kernel engine. A good cluster database may be established only if there is a good database kernel engine.

There are two manners for implementing a cluster database of a shared-disk architecture: One is a completely distributed cluster that is represented by Oracle RAC and in which data consistency of database engine nodes is ensured by using a distributed buffer pool and by means of distributed lock management; and the other is a cluster that has a central coordinator node and is represented by IBM DB2 pureScale (originating from DB2 Data Sharing on an IBM host) and in which data consistency of database engine nodes (data processing nodes) is ensured by using a global buffer pool and a global lock manager.

Both of the foregoing two methods have the following problem: A page needs to be eliminated when a buffer of a data processing node is insufficient, and when the page needs to be accessed again, the page needs to be re-read by using a network or a disk. Consequently, processing overheads are increased.

### SUMMARY

Embodiments of the present invention provide a page query method and a data processing node in an OLTP cluster database, so that processing overheads of an OLTP cluster database engine node (data processing node) can be reduced to some extent.

According to a first aspect, a page query method in an OLTP cluster database is provided, where the OLTP cluster database includes a central node and at least one data processing node, the central node manages a physical lock PLock in a passive PLock releasing processing manner, and the method includes: searching, by the data processing node, a shared memory of the data processing node for a page digest of a first page when the data processing node needs to query the first page during a data query and the first page is not in storage space of a database buffer of the data processing node; and if it is determined, according to the page digest, that target data of the data query cannot be on the first page, skipping performing, by the data processing node, a query operation on the first page, or if it is determined, according to the page digest, that target data of the data query may be on the first page, loading, by the data processing node, the first page into the storage space of the database buffer, and traversing the first page to perform the data query.

With reference to the first aspect, in a first possible implementation manner, specifically, the method further includes: when a page needs to be eliminated because the storage space of the database buffer of the data processing node is insufficient, determining, by the data processing node, a second page that needs to be eliminated from the storage space of the database buffer of the data processing node, retaining a PLock of the second page, generating a page digest of the second page, and eliminating the second page; or when the data processing node holds a physical lock of a third page, generating, by the data processing node, a page digest of the third page in the shared memory of the data processing node.

With reference to the first aspect or the first possible implementation manner of the first aspect, in a second possible implementation manner, the method further includes: when the data processing node receives a message indicating a lock conflict on a fourth page, releasing, by the data processing node, a PLock of the fourth page, and invalidating a page digest of the fourth page, where the fourth page is a page buffered in the storage space of the database buffer of the data processing node, or the fourth page is a page that has been eliminated by the data processing node but whose PLock is still retained.

According to a second aspect, a page query method in an OLTP cluster database is provided, where the OLTP cluster database includes a central node and at least one data processing node, the central node manages a physical lock PLock in a passive PLock releasing processing manner, and the method includes: when the data processing node in the OLTP cluster holds a physical lock of a first page, generating, by the data processing node, the page digest; and when a page needs to be eliminated because storage space of a database buffer of the data processing node is insufficient, determining, by the data processing node, a second page that needs to be eliminated from the storage space of the database buffer of the data processing node, retaining a PLock of the second page, generating a page digest of the second page, and eliminating the second page.

With reference to the second aspect, in a first possible implementation manner, the method further includes: when the data processing node receives a message indicating a lock conflict on a third page, releasing, by the data processing node, a PLock of the third page, and invalidating a page digest of the third page, where the third page is a page buffered in the storage space of the database buffer of the data processing node, or the third page is a page that has been eliminated by the data processing node but whose PLock is still retained.

According to a third aspect, a data processing node in an OLTP cluster database is provided, where the OLTP cluster database in which the data processing node is located includes a central node and at least one data processing node, the central node manages a physical lock PLock in a passive PLock releasing processing manner, and the data processing node includes: a page digest search unit, configured to search a shared memory of the data processing node for a page digest of a first page when the data processing node needs to query the first page during a data query and the first page is not in storage space of a database buffer of the data processing node; and a page access unit, configured to: if it is determined, according to the page digest, that target data of the data query cannot be on the first page, skip performing a query operation on the first page, where the page access unit is further configured to: if it is determined, according to the page digest, that target data of the data query may be on the first page, load the first page into the storage space of the database buffer, and traverse the first page to perform the data query.

With reference to the third aspect, in a first possible implementation manner, the data processing node further includes: a page elimination unit, configured to: when a page needs to be eliminated because the storage space of the database buffer of the data processing node is insufficient, determine a second page that needs to be eliminated from the storage space of the database buffer of the data processing node, retain a PLock of the second page, and eliminate the second page; and a page digest generation unit, configured to generate a page digest of the second page when the page elimination unit eliminates the second page.

With reference to the third aspect or the first possible implementation manner of the third aspect, in a second possible implementation manner, the data processing node further includes: a page digest generation unit, configured to: when the data processing node holds a physical lock of a third page, generate a page digest of the third page in the shared memory of the data processing node.

With reference to the third aspect, the first possible implementation manner of the third aspect, or the second possible implementation manner of the third aspect, in a third possible implementation manner, the data processing node further includes a page digest invalidating unit, configured to: when the data processing node receives a message indicating a lock conflict on a fourth page, release a PLock of the fourth page, and invalidate a page digest of the fourth page, where the fourth page is a page buffered in the storage space of the database buffer of the data processing node, or the fourth page is a page that has been eliminated by the data processing node but whose PLock is still retained.

According to a fourth aspect, a data processing node in an OLTP cluster database is provided, where the OLTP cluster database in which the data processing node is located includes a central node and at least one data processing node, the central node manages a physical lock PLock in a passive PLock releasing processing manner, and the data processing node includes: a page digest generation unit, configured to: when the data processing node holds a physical lock of a first page, create the page digest in storage space of a database buffer of the data processing node; and a page elimination unit, configured to: when a page needs to be eliminated because the storage space of the database buffer of the data processing node is insufficient, determine a second page that needs to be eliminated from the storage space of the database buffer of the data processing node, retain a PLock of the second page, and eliminate the second page, where the page digest generation unit is further configured to generate a page digest of the second page when the page elimination unit eliminates the second page.

With reference to the fourth aspect, in a first possible implementation manner, the data processing node further includes: a page digest invalidating unit, configured to: when the data processing node receives a message indicating a lock conflict on a third page, release a PLock of the third page, and invalidate a page digest of the third page, where the third page is a page buffered in the storage space of the database buffer of the data processing node, or the third page is a page that has been eliminated by the data processing node but whose PLock is still retained.

Based on the foregoing technical solutions, according to the page digest use and management method and the data processing node in the OLTP cluster database in the embodiments of the present invention, during page access, a page is rapidly filtered according to a page digest, so that unnecessary disk IO is reduced, and interaction between the data processing node and a central node is reduced. Therefore, a network communication time can be shortened, processing overheads of the data processing node can be reduced, and processing efficiency of the data processing node can be improved.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a page query method in an OLTP cluster database according to an embodiment of the present invention;
FIG. 2 is a specific flowchart of a page query method in an OLTP cluster database according to an embodiment of the present invention;
FIG. 3 is a flowchart of a page query method in an OLTP cluster database according to an embodiment of the present invention;
FIG. 4 is a schematic structural diagram of a data processing node in an OLTP cluster database according to an embodiment of the present invention;
FIG. 5 is another schematic structural diagram of a data processing node in an OLTP cluster database according to an embodiment of the present invention;
FIG. 6 is another schematic structural diagram of a data processing node in an OLTP cluster database according to an embodiment of the present invention; and
FIG. 7 is another schematic structural diagram of a data processing node in an OLTP cluster database according to an embodiment of the present invention.

### DESCRIPTION OF EMBODIMENTS

The scope of protection is defined in the independent claims of the invention. The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

For ease of understanding the embodiments of the present invention, some elements that may be introduced in descriptions of the embodiments of the present invention are described herein first.

Physical lock (Physical Lock, PLock): In a cluster environment, multiple nodes may operate a same page, and page PLock management needs to be added to ensure accuracy of reading and modifying the page. A PLock includes two access modes: an exclusive (exlusive) access mode and a share (share) access mode. A lock in an exclusive mode needs to be first applied for, so as to modify an index page and a heap page, and a lock in a share mode needs to be first applied for, so as to read an index page and a heap page. A central node in a cluster stores a global lock table for a PLock. Generally, there are two PLock releasing policies: active releasing and passive releasing.

An active PLock releasing processing manner means that a PLock is immediately released after a data processing node in a cluster uses the PLock.

A passive Plock releasing processing manner means that a PLock of a page is not immediately released after being used by a data processing node in a cluster, and when another data processing node requests the PLock of the page from a central node, the central node requires a target node that holds the PLock of the page to release the PLock. In the present invention, the passive PLock releasing processing manner is used for an OLTP cluster database.

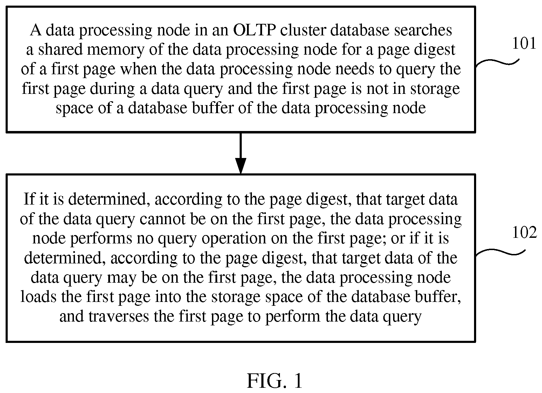

FIG. 1 is a flowchart of a page query method in an OLTP cluster database according to an embodiment of the present invention. The method in FIG. 1 is performed by a data processing node in the OLTP cluster database. The OLTP cluster database includes a central node and at least one data processing node. The central node manages a physical lock PLock in a passive PLock releasing processing manner. The method includes the following steps.

101. The data processing node in the OLTP cluster database searches a shared memory of the data processing node for a page digest of a first page when the data processing node needs to query the first page during a data query and the first page is not in storage space of a database buffer of the data processing node.

It should be understood that a page digest is briefly summarized from some page information that is generated by the data processing node and that facilitates a query. The page digest is stored in a shared memory of each data processing node, and is shared by all processes/threads of a current data processing node.

It should be understood that page digests corresponding to pages of different types include different content. For example, a page digest of an index page may generally record information such as a minimum value, a maximum value, a parent node, and a brother node, and a page digest of a data page records existing digest information of the data page.

It should be understood that a data query process mentioned herein includes a select operation, but does not include operations such as insert, update, and delete that require page write. This is because a lock conflict is caused and the page digest is invalidated when a page write operation is performed.

For example, the data query process may be a data query process of a database query statement "SELECT cust_state ROM customers WHERE cust_age>35 and cust_age<70".

It is assumed that, in the data query process, whether the first page includes related target data needs to be queried. If the first page is already in the storage space of the database buffer of the data processing node, data is directly queried on the first page. If the first page is not in the storage space of the database buffer of the data processing node, the shared memory of the data processing node needs to be searched for the page digest, to determine whether the page digest is in the shared memory of the data processing node.

102. If it is determined, according to the page digest, that target data of the data query cannot be on the first page, the data processing node performs no query operation on the first page; or if it is determined, according to the page digest, that target data of the data query may be on the first page, the data processing node loads the first page into the storage space of the database buffer, and traverses the first page to perform the data query.

It should be understood that, that target data of the data query cannot be on the first page means that the target data of the data query is not on the first page. In other words, the target data of the data query is not included in data stored on the first page.

It should be understood that, that target data of the data query may be on the first page means that the target data of the data query is possibly on the first page. In other words, the target data of the data query may be included in data stored on the first page.

The database query statement "SELECT cust_state ROM customers WHERE cust_age>35 and cust_age<70" is still used as an example for description.

### Example 1:

A page digest of a page 1 shows that a maximum cust_age value and a minimum cust_age value are respectively 20 and 30, and values of a field cust_age are 20, 21, 22, and 30 in a customers table stored on the page 1. It may be determined, according to the page digest of the page 1, that target data of the foregoing database query statement cannot be on the page 1. Therefore, the page 1 may not be queried.

### Example 2:

A page digest of a page 2 shows that a maximum cust_age value and a minimum cust_age value are respectively 20 and 90, and values of a field cust_age are 20, 21, 80, and 90 in a customers table stored on the page 2. It may be determined, according to the page digest of the page 2, that the target data of the data query may be on the page 2. Therefore, the page 2 may be loaded into the storage space of the database buffer, and the page 2 is traversed and queried. Certainly, in this query, target data of the foregoing database query statement is not on the page 2 either.

### Example 3:

A page digest of a page 3 shows that a maximum cust_age value and a minimum cust_age value are respectively 20 and 90, and values of a field cust_age are 20, 41, 61, and 90 in a customers table stored on the page 3. It may be determined, according to the page digest of the page 3, that the target data of the data query may be on the page 3. Therefore, the page 3 may be loaded into the storage space of the database buffer, and the page 3 is traversed and queried. In this query, records in which values of the field cust_age are 41 and 61 may be obtained from the page 2, and values of a field cust_state corresponding to the records are further obtained.

In this embodiment of the present invention, during page access, a page is rapidly filtered according to a page digest, so that unnecessary disk IO is reduced, and interaction between a data processing node and a central node is reduced. Therefore, a network communication time can be shortened, processing overheads of the data processing node can be reduced, and processing efficiency of the data processing node can be improved.

In addition, according to the method in this embodiment of the present invention, because the disk IO and the interaction with the central node are reduced, contention for a shared resource is reduced. In this case, each data processing node uses a private resource of the data processing node as much as possible, and a newly-added data processing node still uses a resource of the newly-added data processing node as much as possible, instead of waiting for the shared resource. This facilitates cluster extension.

Optionally, in an embodiment, the method may further include: When a page needs to be eliminated because the storage space of the database buffer of the data processing node is insufficient, the data processing node determines a second page that needs to be eliminated from the storage space of the database buffer of the data processing node, retains a PLock of the second page, generates a page digest of the second page, and eliminates the second page.

Optionally, in another embodiment, the method may further include: When the data processing node holds a physical lock of a third page, the data processing node generates a page digest of the third page in the shared memory of the data processing node.

In the foregoing two embodiments of the present invention, a page digest of a page is formed by holding a page lock, so that the page is scanned and filtered according to the page digest during page access, and overheads of loading and scanning the page are reduced to some extent.

Optionally, the method further includes: When the data processing node receives a message indicating a lock conflict on a fourth page, the data processing node releases a PLock of the fourth page, and invalidates a page digest of the fourth page. The fourth page is a page buffered in the storage space of the database buffer of the data processing node, or the fourth page is a page that has been eliminated by the data processing node but whose PLock is still retained.

The following further describes the method in this embodiment of the present invention with reference to specific embodiments.

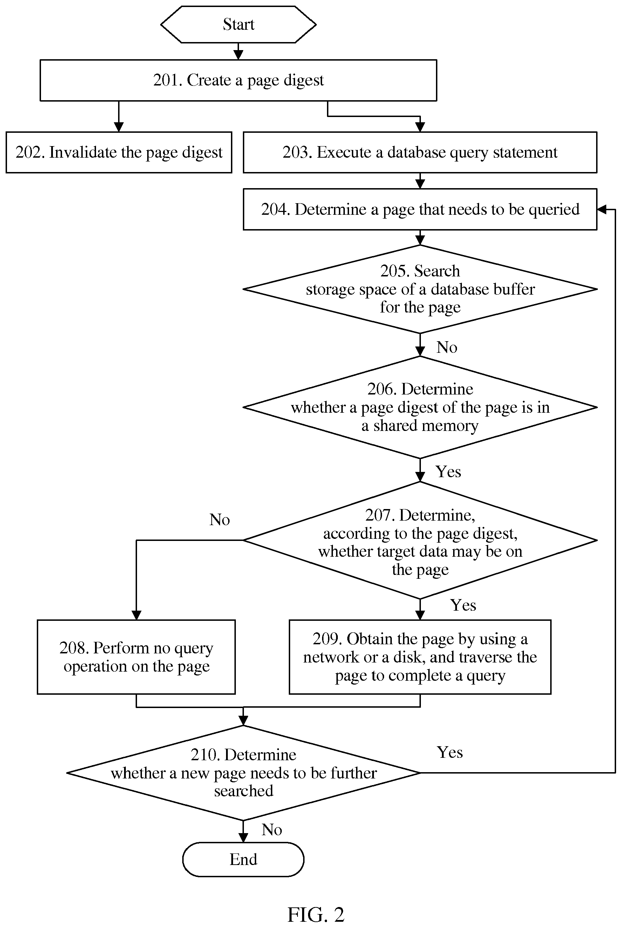

FIG. 2 is a specific flowchart of a page query method in an OLTP cluster database according to an embodiment of the present invention.

The OLTP cluster database may include a central node and several data processing nodes. In a cluster environment, multiple data processing nodes may operate a same page, and page PLock lock management needs to be added to ensure accuracy of reading and modifying the page. A PLock includes two access modes: an exlusive access mode and a share access mode. A lock in an exclusive mode needs to be first applied for, so as to modify an index page and a heap page, and a lock in a share mode needs to be first applied for, so as to read an index page. The central node in a cluster stores a global lock table for a PLock. In this embodiment of the present invention, a passive PLock releasing processing manner is used as a PLock releasing policy.

201. Create a page digest.

When holding a PLock of a page, the data processing node may create a page digest of the page.

When storage space of a database buffer of the data processing node is insufficient, a page needs to be eliminated. For a specific method for selecting a to-be-eliminated page, refer to the prior art. Details are not described herein in this embodiment of the present invention. After the to-be-eliminated page is determined, the data processing node may retain a PLock of the to-be-eliminated page, generate a page digest of the page, and eliminate the page.

As shown in FIG. 2, after the page is created, different branches may be performed according to actual cases.

If a lock conflict occurs and the P lock of the page needs to be released, step 202 is performed.

If the data processing node needs to execute a database query statement, step 203 is performed.

202. Invalidate the page digest.

When the lock conflict occurs and the P lock of the page needs to be released, the page digest of the page is invalidated. A P lock protects a page. When a node holds a P lock of a page, another node can modify the page only after the node releases the P lock. On the contrary, if the P lock of the page is released, such protection no longer exists, and existence of a page digest is meaningless because the page may be modified by another node at any time.

203. Execute a database query statement.

The data processing node executes the database query statement.

It should be understood that the database query statement mentioned in this embodiment of the present invention includes a select operation, but does not include operations such as insert, update, and delete that require page write. This is because a lock conflict is caused and the page digest is invalidated when a page write operation is performed.

204. Determine a page that needs to be queried.

The data processing node determines, according to the database query statement, the page that needs to be queried.

It should be understood that the database query statement may be related to more than one page.

It is assumed that a first page is a to-be-queried page determined by the data processing node.

205. Search storage space of a database buffer for the page.

In this case, the data processing node may search a shared memory for the first page.

If the first page is in the storage space of the database buffer, the first page is directly queried. For specific implementation, refer to the prior art. Then, step 210 is performed.

If the first page is not in the storage space of the database buffer, step 206 is performed.

206. Determine whether a page digest of the page is in a shared memory.

If the first page is not in the storage space of the database buffer, whether a page digest of the first page is in the shared memory of the data processing node needs to be determined.

If the page digest of the first page is not in the shared memory of the data processing node, access permission needs to be obtained from the central node, and then, the first page is obtained by using a network or a disk, and a query operation is performed. For specific implementation, refer to the prior art. Details are not described herein in this embodiment of the present invention.

If the page digest of the first page is in the shared memory of the data processing node, step 207 is performed.

207. Determine, according to the page digest, whether target data may be on the page.

If the page digest of the first page is in the shared memory of the data processing node, whether target data of the data query may be on the first page may be rapidly determined according to the page digest of the first page.

If the target data cannot be on the first page (that is, the target data does is not on the first page), step 208 is performed; otherwise, step 209 is performed.

208. Perform no query operation on the page.

If the page digest indicates that the target data is not on the first page (for example, Example 1 in the embodiment shown in FIG. 1), no query operation is performed on the first page. Then, step 210 is performed.

209. Obtain the page by using a network or a disk, and traverse the page to complete a query.

If the page digest indicates that the target data may be on the first page (for example, Example 2 and Example 3 in the embodiment shown in FIG. 1), because it is already determined in step 205 that the first page is not in the storage space of the database buffer, the first page is a to-be-eliminated page.

In this case, the first page may be directly loaded into the storage space of the database buffer of the data processing node by using the network or the disk, and the page is traversed to complete the query. Corresponding read permission no longer needs to be obtained from the central node because the node already has the permission.

Then, step 210 is performed.

210. Determine whether a new page needs to be further searched.

If the new page needs to be further searched, step 204 is performed; otherwise, the procedure ends.

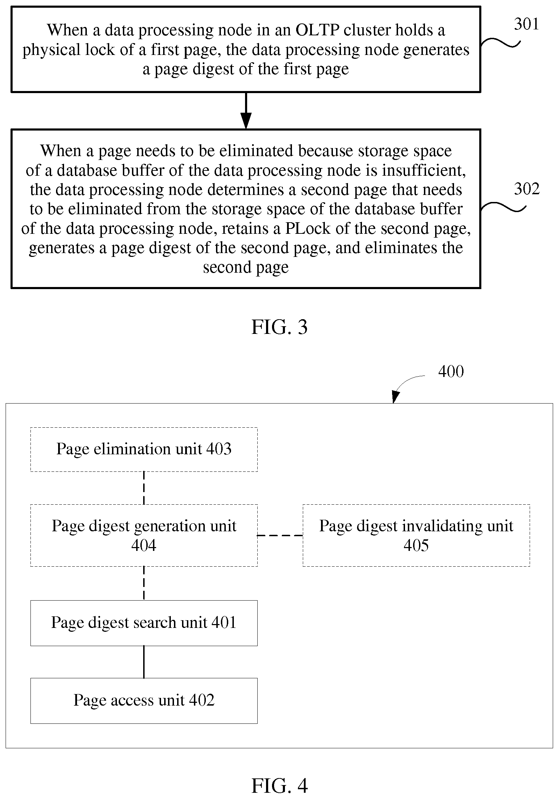

FIG. 3 is a flowchart of a page query method in an OLTP cluster database according to an embodiment of the present invention. The method in FIG. 2 is performed by a data processing node. The OLTP cluster database includes a central node and at least one data processing node. The central node manages a physical lock PLock in a passive PLock releasing processing manner. The method includes the following steps:

301. When the data processing node in the OLTP cluster holds a physical lock of a first page, the data processing node generates the page digest.

302. When a page needs to be eliminated because storage space of a database buffer of the data processing node is insufficient, the data processing node determines a second page that needs to be eliminated from the storage space of the database buffer of the data processing node, retains a PLock of the second page, generates a page digest of the second page, and eliminates the second page.

In this embodiment of the present invention, a page digest of a page is created when a PLock of the page is held, and when a page is eliminated, a PLock of the eliminated page is retained, and a page digest of the eliminated page is created. In this case, during subsequent page access of the data processing node, a page can be rapidly filtered according to a page digest, so that unnecessary disk IO is reduced, and interaction between the data processing node and a central node is reduced. Therefore, a network communication time can be shortened, processing overheads of the data processing node can be reduced, and processing efficiency of the data processing node can be improved.

Optionally, the method further includes: when the data processing node receives a message indicating a lock conflict on a third page, the data processing node releases a PLock of the third page and invalidates a page digest of the third page. The third page is a page buffered in the storage space of the database buffer of the data processing node, or the third page is a page that has been eliminated by the data processing node but whose PLock is still retained.

FIG. 4 is a schematic structural diagram of a data processing node 400 in an OLTP cluster database according to an embodiment of the present invention. The OLTP cluster database in which the data processing node 400 is located includes a central node and at least one data processing node 400. The central node manages a PLock in a passive PLock releasing processing manner. As shown in FIG. 4, the data processing node 400 may include a page digest search unit 401 and a page access unit 402.

The page digest search unit 401 is configured to search a shared memory of the data processing node 400 for a page digest of a first page when the data processing node 400 needs to query the first page during a data query and the first page is not in storage space of a database buffer of the data processing node.

The page access unit 402 is configured to: if it is determined, according to the page digest, that target data of the data query cannot be on the first page, perform no query operation on the first page.

In addition, the page access unit 402 is further configured to: if it is determined, according to the page digest, that target data of the data query may be on the first page, load the first page into the storage space of the database buffer, and traverse the first page to perform the data query.

In this embodiment of the present invention, during page access, the data processing node 400 rapidly filters a page according to a page digest, so that unnecessary disk IO is reduced, and interaction between the data processing node and a central node is reduced. Therefore, a network communication time can be shortened, processing overheads of the data processing node can be reduced, and processing efficiency of the data processing node can be improved.

Optionally, in an embodiment, the data processing node 400 may further include a page elimination unit 403 and a page digest generation unit 404. The page elimination unit 403 is configured to: when a page needs to be eliminated because the storage space of the database buffer of the data processing node 400 is insufficient, determine a second page that needs to be eliminated from the storage space of the database buffer of the data processing node 400, retain a PLock of the second page, and eliminate the second page. The page digest generation unit 404 is configured to generate a page digest of the second page when the page elimination unit 403 eliminates the second page.

Optionally, in another embodiment, the page digest generation unit 404 may be further configured to: when the data processing node 400 holds a physical lock of a third page, generate a page digest of the third page in the shared memory of the data processing node 400.

Optionally, in another embodiment, the data processing node 400 may further include a page digest invalidating unit 405, configured to: when the data processing node 400 receives a message indicating a lock conflict on a fourth page, release a PLock of the fourth page, and invalidate a page digest of the fourth page. The fourth page is a page buffered in the storage space of the database buffer of the data processing node 400, or the fourth page is a page that has been eliminated by the data processing node 400 but whose PLock is still retained.

In addition, the data processing node 400 may further perform the method in FIG. 1 and implement functions of the data processing node in the embodiments shown in FIG. 1 and FIG. 2. Details are not described herein again in this embodiment of the present invention.

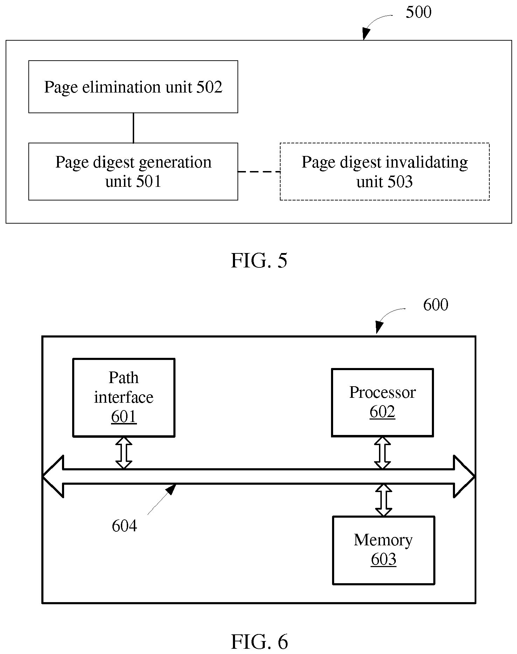

FIG. 5 is another schematic structural diagram of a data processing node in an OLTP cluster database according to an embodiment of the present invention. An OLTP cluster database in which a data processing node 500 is located includes a central node and at least one data processing node 500. The central node manages a PLock in a passive PLock releasing processing manner. As shown in FIG. 5, the data processing node 500 may include a page digest generation unit 501 and a page elimination unit 502.

The page digest generation unit 501 is configured to: when the data processing node 500 holds a physical lock of a first page, create the page digest in storage space of a database buffer of the data processing node 500.

The page elimination unit 502 is configured to: when a page needs to be eliminated because the storage space of the database buffer of the data processing node 500 is insufficient, determine a second page that needs to be eliminated from the storage space of the database buffer of the data processing node 500, retain a PLock of the second page, and eliminate the second page.

The page digest generation unit 501 is further configured to generate a page digest of the second page when the page elimination unit 502 eliminates the second page.

In this embodiment of the present invention, the data processing node 500 creates a page digest of a page when holding a PLock of the page; and when a page is eliminated, the data processing node 500 retains a PLock of the eliminated page and creates a page digest of the eliminated page. In this case, during subsequent page access of the data processing node, a page can be rapidly filtered according to a page digest, so that unnecessary disk IO is reduced, and interaction between the data processing node and a central node is reduced. Therefore, a network communication time can be shortened, processing overheads of the data processing node can be reduced, and processing efficiency of the data processing node can be improved.

Optionally, the data processing node 500 may further include a page digest invalidating unit 503, configured to: when the data processing node 500 receives a message indicating a lock conflict on a third page, release a PLock of the third page, and invalidate a page digest of the third page. The third page is a page buffered in the storage space of the database buffer of the data processing node 500, or the third page is a page that has been eliminated by the data processing node 500 but whose PLock is still retained.

In addition, the data processing node 500 may further perform the method in FIG. 3 and implement functions of creating and invalidating a page digest that are performed by the data processing node in the embodiments shown in FIG. 2 and FIG. 3. Details are not described herein again in this embodiment of the present invention.

FIG. 6 is still another schematic structural diagram of a data processing node 600 in an OLTP cluster database according to an embodiment of the present invention. The OLTP cluster database in which the data processing node 600 is located includes a central node and at least one data processing node 600. The central node manages a PLock in a passive PLock releasing processing manner. As shown in FIG. 6, the data processing node 600 may include a path interface 601, a processor 602, and a memory 603.

The path interface 601, the processor 602, and the memory 603 are connected to each other by using a bus system 604. The bus 604 may be an ISA bus, a PCI bus, an EISA bus, or the like. The bus may be classified into an address bus, a data bus, a control bus, and the like. For ease of denotation, in FIG. 6, the bus 604 is indicated by using only one double-headed arrow; however, it does not indicate that there is only one bus or only one type of bus.

The memory 603 is configured to store a program. Specifically, the program may include program code, and the program code includes a computer operation instruction. The memory 603 may include a read-only memory and a random access memory, and provide an instruction and data to the processor 602. The memory 603 may include a high-speed RAM memory, and may further include a non-volatile memory (non-volatile memory), for example, at least one magnetic disk memory.

The processor 602 executes the program stored in the memory 603 and is specifically configured to perform the following operations:
searching a shared memory of the data processing node 600 for a page digest of a first page when the data processing node 600 needs to query the first page during a data query and the first page is not in storage space of a database buffer of the data processing node;
if it is determined, according to the page digest, that target data of the data query cannot be on the first page, skipping performing a query operation on the first page; or if it is determined, according to the page digest, that target data of the data query may be on the first page, loading the first page into the storage space of the database buffer, and traversing the first page to perform the data query.

The foregoing method that is performed by the data processing node and that is disclosed in either embodiment in FIG. 1 or FIG. 2 of the present invention may be applied to the processor 602, or may be implemented by the processor 602. The processor 602 may be an integrated circuit chip and has a signal processing capability. In an implementation process, steps of the foregoing method may be implemented by using an integrated logical circuit of hardware in the processor 602 or an instruction in a form of software. The foregoing processor 602 may be a general purpose processor including a central processing unit (Central Processing Unit, CPU for short), a network processor (Network Processor, NP for short), and the like, or may be a digital signal processor (DSP), an application-specific integrated circuit (ASIC), a field programmable gate array (FPGA), another programmable logic device, a discrete gate or transistor logic device, or a discrete hardware component. The processor 602 may implement or perform all methods, steps, and logical block diagrams disclosed in the embodiments of the present invention. The general purpose processor may be a microprocessor, or the processor may be any conventional processor or the like. Steps of the methods disclosed with reference to the embodiments of the present invention may be directly implemented by a hardware decoding processor, or may be implemented by using a combination of hardware and software modules in a decoding processor. The software module may be located in a mature storage medium in the field such as a random access memory, a flash memory, a read-only memory, a programmable read-only memory, an electrically erasable programmable memory, or a register. The storage medium is located in the memory 603. The processor 602 reads information in the memory 603 and implements the steps of the foregoing method with reference to hardware of the processor 602.

Optionally, in an embodiment, the processor 602 is further configured to: when a page needs to be eliminated because the storage space of the database buffer of the data processing node 600 is insufficient, determine a second page that needs to be eliminated from the storage space of the database buffer of the data processing node 600, retain a PLock of the second page, generate a page digest of the second page, and eliminate the second page.

Optionally, in another embodiment, the processor 602 is further configured to: when the data processing node 600 holds a physical lock of a third page, generate a page digest of the third page in the shared memory of the data processing node 600.

Optionally, in another embodiment, the processor 602 is further configured to: when the data processing node 600 receives a message indicating a lock conflict on a fourth page, release a PLock of the fourth page, and invalidate a page digest of the fourth page. The fourth page is a page buffered in the storage space of the database buffer of the data processing node 600, or the fourth page is a page that has been eliminated by the data processing node 600 but whose PLock is still retained.

In addition, the data processing node 600 may further perform the method in FIG. 1 and implement functions of the data processing node in the embodiments shown in FIG. 1 and FIG. 2. Details are not described herein again in this embodiment of the present invention.

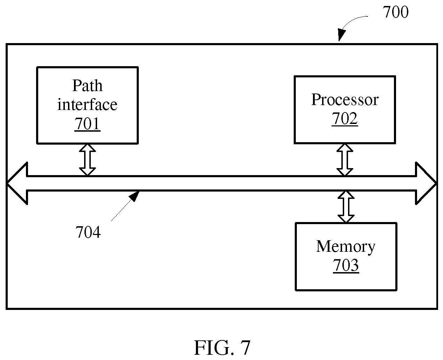

FIG. 7 is yet another schematic structural diagram of a data processing node 700 in an OLTP cluster database according to an embodiment of the present invention. The OLTP cluster database in which the data processing node 700 is located includes a central node and at least one data processing node 700. The central node manages a PLock in a passive PLock releasing processing manner. As shown in FIG. 7, the data processing node 700 may include a path interface 701, a processor 702, and a memory 703.

The path interface 701, the processor 702, and the memory 703 are connected to each other by using a bus system 704. The bus 704 may be an ISA bus, a PCI bus, an EISA bus, or the like. The bus may be classified into an address bus, a data bus, a control bus, and the like. For ease of denotation, in FIG. 7, the bus 704 is indicated by using only one double-headed arrow; however, it does not indicate that there is only one bus or only one type of bus.

The memory 703 is configured to store a program. Specifically, the program may include program code, and the program code includes a computer operation instruction. The memory 703 may include a read-only memory and a random access memory, and provide an instruction and data to the processor 702. The memory 703 may include a high-speed RAM memory, and may further include a non-volatile memory (non-volatile memory), for example, at least one magnetic disk memory.

The processor 702 executes the program stored in the memory 703 and is specifically configured to perform the following operations:
when the data processing node 700 holds a physical lock of a first page, generating the page digest; and
when a page needs to be eliminated because storage space of a database buffer of the data processing node 700 is insufficient, determining a second page that needs to be eliminated from the storage space of the database buffer of the data processing node, retaining a PLock of the second page, generating a page digest of the second page, and eliminating the second page.

The foregoing method that is performed by the data processing node and that is disclosed in FIG. 3 of the present invention and the foregoing page digest management method for the data processing node that is disclosed in FIG. 2 of the present invention may be applied to the processor 702, or may be implemented by the processor 702. The processor 702 may be an integrated circuit chip and has a signal processing capability. In an implementation process, steps of the foregoing method may be implemented by using an integrated logical circuit of hardware in the processor 702 or an instruction in a form of software. The foregoing processor 702 may be a general purpose processor including a central processing unit (Central Processing Unit, CPU for short), a network processor (Network Processor, NP for short), and the like, or may be a digital signal processor (DSP), an application-specific integrated circuit (ASIC), a field programmable gate array (FPGA), another programmable logic device, a discrete gate or transistor logic device, or a discrete hardware component. The processor 702 may implement or perform all methods, steps, and logical block diagrams disclosed in the embodiments of the present invention. The general purpose processor may be a microprocessor, or the processor may be any conventional processor or the like. Steps of the methods disclosed with reference to the embodiments of the present invention may be directly implemented by a hardware decoding processor, or may be implemented by using a combination of hardware and software modules in a decoding processor. The software module may be located in a mature storage medium in the field such as a random access memory, a flash memory, a read-only memory, a programmable read-only memory, an electrically erasable programmable memory, or a register. The storage medium is located in the memory 703. The processor 702 reads information in the memory 703 and implements the steps of the foregoing method with reference to hardware of the processor 702.

Optionally, in an embodiment, the processor 702 is further configured to: when the data processing node 700 receives a message indicating a lock conflict on a third page, release a PLock of the third page, and invalidate a page digest of the third page. The third page is a page buffered in the storage space of the database buffer of the data processing node 700, or the third page is a page that has been eliminated by the data processing node 700 but whose PLock is still retained.

In addition, the data processing node 700 may further perform the method in FIG. 3 and implement functions of creating and invalidating a page digest that are performed by the data processing node in the embodiments shown in FIG. 2 and FIG. 3. Details are not described herein again in this embodiment of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A page query method in an online transaction processing OLTP cluster database, wherein the OLTP cluster database comprises a central node and at least one data processing node, the central node manages a physical lock, Plock, in a passive PLock releasing processing manner, according to which the PLock of an individual page is not released immediately after use by an individual data processing node, and when another data processing node requests the PLock of the individual page from the central node, the central node requires the individual data processing node that holds the PLock of the individual page to release the Plock, the method comprising:
searching, by the data processing node, a shared memory of the data processing node for a page digest of a first page when the data processing node needs to query the first page during a data query and the first page is not in storage space of a database buffer of the data processing node; and
if it is determined, according to the page digest, that target data of the data query cannot be on the first page, skipping performing, by the data processing node, a query operation on the first page; or if it is determined, according to the page digest, that target data of the data query may be on the first page, loading, by data processing node, the first page into the storage space of the database buffer, and traversing the first page to perform the data query;
wherein the method further comprises:
when a page needs to be eliminated because the storage space of the database buffer of the data processing node is insufficient, determining, by the data processing node, a second page that needs to be eliminated from the storage space of the database buffer of the data processing node, retaining a PLock of the second page, generating a page digest of the second page, and eliminating the second page.

2. The method according to claim 1, wherein the method further comprises:
when the data processing node receives a message indicating a lock conflict on a fourth page, releasing, by the data processing node, a PLock of the fourth page, and invalidating a page digest of the fourth page, wherein the fourth page is a page buffered in the storage space of the database buffer of the data processing node, or the fourth page is a page that has been eliminated by the data processing node but whose PLock is still retained.

3. A data processing node in an online transaction processing OLTP cluster database, wherein the OLTP cluster database in which the data processing node is located comprises a central node and at least one data processing node, the central node manages a physical lock PLock in a passive PLock releasing processing manner, according to which the PLock of an individual page is not released immediately after use by an individual data processing node, and when another data processing node requests the PLock of the individual page from the central node, the central node requires the individual data processing node that holds the PLock of the individual page to release the Plock, the data processing node comprising:
a page digest search unit, configured to search a shared memory of the data processing node for a page digest of a first page when the data processing node needs to query the first page during a data query and the first page is not in storage space of a database buffer of the data processing node; and
a page access unit, configured to: if it is determined, according to the page digest, that target data of the data query cannot be on the first page, skip performing a query operation on the first page; wherein
the page access unit is further configured to: if it is determined, according to the page digest, that target data of the data query may be on the first page, load the first page into the storage space of the database buffer, and traverse the first page to perform the data query;
wherein the data processing node further comprises:
a page elimination unit, configured to: when a page needs to be eliminated because the storage space of the database buffer of the data processing node is insufficient, determine a second page that needs to be eliminated from the storage space of the database buffer of the data processing node, retain a PLock of the second page, and eliminate the second page; and
a page digest generation unit, configured to generate a page digest of the second page when the page elimination unit eliminates the second page.

4. The data processing node according to claim 3, wherein the data processing node further comprises:
a page digest invalidating unit, configured to: when the data processing node receives a message indicating a lock conflict on a fourth page, release a PLock of the fourth page, and invalidate a page digest of the fourth page, wherein the fourth page is a page buffered in the storage space of the database buffer of the data processing node, or the fourth page is a page that has been eliminated by the data processing node but whose PLock is still retained.

5. A computer program product, comprising computer readable instructions which when executed by a data processing node cause the data processing node to carry out a page query method according to claim 1 or 2.

## Patentansprüche

1. Seitenabfrageverfahren in einer Online-Transaktionsverarbeitungs-OLTP-Cluster-Datenbank, wobei die OLTP-Cluster-Datenbank einen zentralen Knoten und mindestens einen Datenverarbeitungsknoten umfasst, wobei der zentrale Knoten eine physikalische Sperre, PLock, in einer passiven PLock-Freigabeverarbeitungsweise verwaltet, gemäß welcher der PLock einer einzelnen Seite nicht unmittelbar nach der Verwendung durch einen einzelnen Datenverarbeitungsknoten freigegeben wird, und wenn ein anderer Datenverarbeitungsknoten den PLock der einzelnen Seite vom zentralen Knoten anfordert, den PLock freizugeben, das Verfahren Folgendes umfassend:
Durchsuchen eines gemeinsam genutzten Speichers des Datenverarbeitungsknotens durch den Datenverarbeitungsknoten nach einem Seitenauszug einer ersten Seite, wenn der Datenverarbeitungsknoten die erste Seite während einer Datenabfrage abfragen muss und die erste Seite sich nicht im Speicherplatz eines Datenbankpuffers des Datenverarbeitungsknotens befindet; und
wenn gemäß dem Seitenauszug festgestellt wird, dass sich die Zieldaten der Datenabfrage nicht auf der ersten Seite befinden können, Überspringen der Ausführung, durch den Datenverarbeitungsknoten, einer Abfrageoperation auf der ersten Seite; oder
wenn gemäß dem Seitenauszug festgestellt wird, dass sich die Zieldaten der Datenabfrage auf der ersten Seite befinden können, Laden, durch den Datenverarbeitungsknoten, der ersten Seite in den Speicherplatz des Datenbankpuffers und Durchlaufen der ersten Seite, um die Datenabfrage durchzuführen;
das Verfahren ferner Folgendes umfassend:
wenn eine Seite entfernt werden muss, weil der Speicherplatz des Datenbankpuffers des Datenverarbeitungsknotens nicht ausreicht, Bestimmen, durch den Datenverarbeitungsknoten, einer zweiten Seite, die aus dem Speicherplatz des Datenbankpuffers des Datenverarbeitungsknotens entfernt werden muss, Beibehalten eines PLock der zweiten Seite, Erzeugen eines Seitenauszugs der zweiten Seite und Entfernen der zweiten Seite.

2. Verfahren nach Anspruch 1, das Verfahren ferner Folgendes umfassend:
wenn der Datenverarbeitungsknoten eine Nachricht empfängt, die einen Sperrkonflikt auf einer vierten Seite anzeigt, Freigeben, durch den Datenverarbeitungsknoten, eines PLocks der vierten Seite und Ungültigmachen eines Seitenauszugs der vierten Seite, wobei die vierte Seite eine Seite ist, die im Speicherplatz des Datenbankpuffers des Datenverarbeitungsknotens gepuffert ist, oder die vierte Seite eine Seite ist, die durch den Datenverarbeitungsknoten entfernt wurde, deren PLock aber immer noch beibehalten wird.

3. Datenverarbeitungsknoten in einer Online-Transaktionsverarbeitungs-OLTP-Clusterdatenbank, wobei die OLTP-Clusterdatenbank, in der sich der Datenverarbeitungsknoten befindet, einen zentralen Knoten und mindestens einen Datenverarbeitungsknoten umfasst, wobei der zentrale Knoten eine physische Sperre PLock in einer passiven PLock-Freigabeverarbeitungsweise verwaltet, gemäß welcher die Sperre einer einzelnen Seite nicht unmittelbar nach der Verwendung durch einen einzelnen Datenverarbeitungsknoten freigegeben wird, und wenn ein anderer Datenverarbeitungsknoten die Sperre der einzelnen Seite vom zentralen Knoten anfordert, der zentrale Knoten den einzelnen Datenverarbeitungsknoten, der die Sperre der einzelnen Seite hält, auffordert, die Sperre freizugeben, wobei der Datenverarbeitungsknoten Folgendes umfasst:
eine Seitenauszug-Sucheinheit, die dafür konfiguriert ist, einen gemeinsamen Speicher des Datenverarbeitungsknotens nach einem Seitenauszug einer ersten Seite zu durchsuchen, wenn der Datenverarbeitungsknoten die erste Seite während einer Datenabfrage abfragen muss und sich die erste Seite nicht im Speicherplatz eines Datenbankpuffers des Datenverarbeitungsknotens befindet; und
eine Seitenzugriffseinheit, die für Folgendes konfiguriert ist:
wenn gemäß dem Seitenauszug festgestellt wird, dass sich die Zieldaten der Datenabfrage nicht auf der ersten Seite befinden können, Überspringen der Ausführung einer Abfrageoperation auf der ersten Seite;
wobei die Seitenzugriffseinheit ferner für Folgendes konfiguriert ist:
wenn gemäß dem Seitenauszug festgestellt wird, dass sich die Zieldaten der Datenabfrage auf der ersten Seite befinden können, Laden der ersten Seite in den Speicherplatz des Datenbankpuffers und Durchlaufen der ersten Seite, um die Datenabfrage auszuführen;
der Datenverarbeitungsknoten ferner Folgendes umfassend:
eine Seitenentfernungseinheit, die für Folgendes konfiguriert ist:
wenn eine Seite entfernt werden muss, weil der Speicherplatz des Datenbankpuffers des Datenverarbeitungsknotens nicht ausreicht, Bestimmen einer zweiten Seite, die aus dem Speicherplatz des Datenbankpuffers des Datenverarbeitungsknotens entfernt werden muss, Beibehalten eines PLocks der zweiten Seite und Entfernen der zweiten Seite; und
eine Seitenauszug-Erzeugungseinheit, die dafür konfiguriert ist, einen Seitenauszug der zweiten Seite zu erzeugen, wenn die Seitenentfernungseinheit die zweite Seite entfernt.

4. Datenverarbeitungsknoten nach Anspruch 3, der Datenverarbeitungsknoten ferner Folgendes umfassend:
eine Einheit zum Ungültigmachen des Seitenauszugs, die für Folgendes konfiguriert ist:
wenn der Datenverarbeitungsknoten eine Nachricht empfängt, die einen Sperrkonflikt auf einer vierten Seite anzeigt, Freigeben eines PLocks der vierten Seite und Ungültigmachen eines Seitenauszugs der vierten Seite, wobei die vierte Seite eine Seite ist, die im Speicherplatz des Datenbankpuffers des Datenverarbeitungsknotens gepuffert ist, oder die vierte Seite eine Seite ist, die durch den Datenverarbeitungsknoten entfernt wurde, deren PLock aber immer noch beibehalten wird.

5. Computerprogrammprodukt, umfassend computerlesbare Befehle, die bei ihrer Ausführung durch einen Datenverarbeitungsknoten den Datenverarbeitungsknoten veranlassen, ein Seitenabfrageverfahren nach Anspruch 1 oder 2 auszuführen.

## Revendications

1. Procédé d'interrogation de page dans une base de données en grappe OLTP de traitement de transactions en ligne, dans lequel la base de données en grappe OLTP comprend un nœud central et au moins un nœud de traitement de données, le nœud central gère un verrouillage physique (PLock) dans un mode passif de traitement de libération de verrouillage physique, selon lequel le verrouillage physique d'une page individuelle n'est pas libéré immédiatement après utilisation par un nœud de traitement de données individuel, et lorsqu'un autre nœud de traitement de données demande le verrouillage physique de la page individuelle au nœud central, le nœud central nécessite le nœud de traitement de données individuel qui contient le verrouillage physique de la page individuelle pour libérer le verrouillage physique, le procédé comprenant :
la recherche, par le nœud de traitement de données, d'une mémoire partagée du nœud de traitement de données pour un résumé de page d'une première page lorsque le nœud de traitement de données doit interroger la première page lors d'une interrogation de données et que la première page n'est pas dans l'espace de stockage d'un tampon de base de données du nœud de traitement de données ; et
s'il est déterminé, conformément au résumé de page, que les données cibles de l'interrogation de données ne peuvent pas être sur la première page, le saut de l'exécution, par le nœud de traitement de données, d'une opération d'interrogation sur la première page ; ou
s'il est déterminé, conformément au résumé de page, que les données cibles de l'interrogation de données peuvent être sur la première page, le chargement, par le nœud de traitement de données, de la première page dans l'espace de stockage du tampon de base de données et le parcours de la première page pour effectuer l'interrogation de données ;
le procédé comprenant en outre :
lorsqu'une page doit être supprimée en raison de l'insuffisance de l'espace de stockage du tampon de base de données du nœud de traitement de données, la détermination, par le nœud de traitement de données, d'une seconde page qui doit être éliminée de l'espace de stockage du tampon de base de données du nœud de traitement de données, la conservation d'un verrouillage physique de la seconde page, la génération d'un résumé de page de la seconde page et l'élimination de la seconde page.

2. Procédé selon la revendication 1, dans lequel le procédé comprend en outre :
lorsque le nœud de traitement de données reçoit un message indiquant un conflit de verrouillage sur une quatrième page, la libération, par le nœud de traitement de données, d'un verrouillage physique de la quatrième page, et l'invalidation d'un résumé de page de la quatrième page, dans lequel la quatrième page est une page tamponnée dans l'espace de stockage du tampon de base de données du nœud de traitement de données, ou la quatrième page est une page qui a été supprimée par le nœud de traitement de données mais dont le verrouillage physique est toujours conservé.

3. Nœud de traitement de données dans une base de données en grappe OLTP de traitement de transactions en ligne, dans lequel la base de données en grappe OLTP dans laquelle se trouve le nœud de traitement de données comprend un nœud central et au moins un nœud de traitement de données, le nœud central gère un verrouillage physique dans un mode passif de traitement de libération de verrouillage physique, selon lequel le verrouillage physique d'une page individuelle n'est pas libéré immédiatement après utilisation par un nœud de traitement de données individuel, et lorsqu'un autre nœud de traitement de données demande le verrouillage physique de la page individuelle au nœud central, le nœud central nécessite le nœud de traitement de données individuel qui contient le verrouillage physique de la page individuelle pour libérer le verrouillage physique, le nœud de traitement de données comprenant :
une unité de recherche de résumé de page, configurée pour rechercher dans une mémoire partagée du nœud de traitement de données pour un résumé de page d'une première page lorsque le nœud de traitement de données doit interroger la première page lors d'une interrogation de données et que la première page n'est pas dans l'espace de stockage d'un tampon de base de données du nœud de traitement de données ; et
une unité d'accès de page, configurée pour :
s'il est déterminé, conformément au résumé de page, que les données cibles de l'interrogation de données ne peuvent pas être sur la première page, sauter l'exécution d'une opération d'interrogation sur la première page ;
dans lequel l'unité d'accès de page est en outre configurée pour :
s'il est déterminé, conformément au résumé de page, que les données cibles de l'interrogation de données peuvent être sur la première page, charger la première page dans l'espace de stockage du tampon de base de données et pour parcourir la première page pour effectuer l'interrogation de données ;
dans lequel le nœud de traitement de données comprend en outre :
une unité d'élimination de page, configurée pour :
lorsqu'une page doit être éliminée en raison de l'insuffisance de l'espace de stockage du tampon de base de données du nœud de traitement de données, déterminer une seconde page qui doit être éliminée de l'espace de stockage du tampon de base de données du nœud de traitement de données, conserver un verrouillage physique de la seconde page et pour éliminer la seconde page ; et
une unité de génération de résumé de page, configurée pour générer un résumé de page de la seconde page lorsque l'unité d'élimination de page élimine la seconde page.

4. Nœud de traitement de données selon la revendication 3, dans lequel le nœud de traitement de données comprend en outre :
une unité d'invalidation de résumé de page, configurée pour :
lorsque le nœud de traitement de données reçoit un message indiquant un conflit de verrouillage sur une quatrième page, libérer, par le nœud de traitement de données, d'un verrouillage physique de la quatrième page, et pour invalider un résumé de page de la quatrième page, dans lequel la quatrième page est une page tamponnée dans l'espace de stockage du tampon de base de données du nœud de traitement de données, ou la quatrième page est une page qui a été supprimée par le nœud de traitement de données mais dont le verrouillage physique est toujours conservé.

5. Produit de programme informatique, comprenant des instructions lisibles par ordinateur qui, lorsqu'elles sont exécutées par un nœud de traitement de données, amènent le nœud de traitement de données à exécuter un procédé d'interrogation de page selon la revendication 1 ou 2.
